(19) 

Europäisches
Patentamt
European
Patent Office
Office européen
des brevets

(11) **EP 4 660 142 A1**

(12) **EUROPEAN PATENT APPLICATION**
published in accordance with Art. 153(4) EPC

(43) Date of publication:
**10.12.2025 Bulletin 2025/50**

(21) Application number: 23920012.4

(22) Date of filing: 26.12.2023

(51) International Patent Classification (IPC):
*C01G 23/00* (2006.01)          *C08K 3/24* (2006.01)
*C08K 7/18* (2006.01)          *C08L 101/00* (2006.01)

(52) Cooperative Patent Classification (CPC):
**C01G 23/00; C08K 3/24; C08K 7/18; C08L 101/00**

(86) International application number:
**PCT/JP2023/046657**

(87) International publication number:
**WO 2024/161877 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.01.2023 JP 2023011988

(71) Applicant: **Toda Kogyo Corp.**
**Hiroshima-shi, Hiroshima 732-0828 (JP)**

(72) Inventors:
• **KAWAI, Naho**
**Otake-shi, Hiroshima 739-0652 (JP)**
• **NAKATA, Kenichi**
**Otake-shi, Hiroshima 739-0652 (JP)**

• **BITO, Shin**
**Otake-shi, Hiroshima 739-0652 (JP)**
• **KAWAGUCHI, Takamoto**
**Otake-shi, Hiroshima 739-0652 (JP)**
• **TAMARI, Kousaku**
**Otake-shi, Hiroshima 739-0652 (JP)**
• **UEMOTO, Shinji**
**Otake-shi, Hiroshima 739-0652 (JP)**
• **MITANI, Yoshifumi**
**Otake-shi, Hiroshima 739-0652 (JP)**
• **KAWAI, Yoshiki**
**Otake-shi, Hiroshima 739-0652 (JP)**
• **ZHANG, Anyu**
**Otake-shi, Hiroshima 739-0652 (JP)**

(74) Representative: **Schiweck Weinzierl Koch
Patentanwälte Partnerschaft mbB
Ganghoferstraße 68 B
80339 München (DE)**

(54) **SURFACE-TREATED SPHERICAL STRONTIUM TITANATE PARTICULATE POWDER,
DISPERSION, AND RESIN COMPOSITION**

(57)    The spherical strontium titanate fine particle powder having an average primary particle size of 50 nm or less and having been surface-treated with a surface treatment agent in an amount of 5 to 30% by weight, is fine and spherical, so that a transparent composite film can be obtained. In addition, the surface treatment improves the solvent affinity of the surface of the fine particles, so that a powder, dispersion, and resin compo- sition with high dispersion stability can be prepared, thus, a composite thin film without white turbidity can be pro- vided.

**EP 4 660 142 A1**

**Description**

TECHNICAL FIELD

An object of the present invention is to obtain a surface-treated spherical strontium titanate fine particle powder that is optimal for use as a filler.

BACKGROUND ART

In recent years, with the trend toward miniaturization, higher performance, and lighter weight of various electronic devices, there is an increasing need for organic-inorganic hybrid materials that have the functionality of inorganic fillers (refractive index, dielectric constant, electrical conductivity, magnetism, thermal conductivity, etc.) while maintaining the processability of organic resins.

For example, brightness enhancement films used in displays and diffractive optical elements used in AR/MR glasses, etc. require a high refractive index that cannot be achieved by resin alone in order to obtain characteristics such as high brightness, thin film, improved viewing angle, etc. Therefore, adding inorganic fillers with a high refractive index to resins to improve the transparency of resin films has been considered.

The properties required for inorganic fillers in such hybrid materials include transparency and dispersion stability. To satisfy the transparency requirement, fine spherical particles with good particle size distribution are required. In addition, to achieve dispersion stability, the particle surface is required to have solvent affinity.

On the other hand, strontium titanate is a highly functional material with a perovskite structure, and is used alone for a variety of applications. Strontium titanate is used, for example, for optical applications such as pigments, reflectors, and light collectors, taking advantage of its high refractive index, for ceramic capacitor applications due to its high dielectric constant, for visible light photocatalysis due to its photocatalytic activity, and for semiconductors, semiconductor capacitors, thermoelectric materials, EL, and light-emitting materials, taking advantage of its semiconducting properties due to the addition of other elements.

It is expected that strontium titanate, which has such high functionality, can be used to form a composite with resin to create a new material with functionality that cannot be achieved with resin alone.

As a method for obtaining fine strontium titanate particle powders, reactions in aqueous systems such as hydrothermal reactions are known. However, the surface of the strontium titanate particles is hydrophilic, and particle powders with moisture, which has a high liquid bridging power, adsorbed on the particle surface tend to aggregate, therefore, when mixed with organic substances such as resins and solvents, interparticle aggregation is likely to occur, and there are problems with the transparency of composite films formed by coating a thin film of a composite liquid in which a resin and a filler are mixed, and the stability of the dispersion.

There have been various reports on strontium titanate fine particles.

CITATION LIST

PATENT LITERATURE

[Patent Literature 1] International Publication WO2019/123916
[Patent Literature 2] Japanese Laid-Open Patent Publication No. 2022-58093

SUMMARY OF INVENTION

TECHNICAL PROBLEM

However, although there is currently a great demand for such a strontium titanate fine particle powder suitable for fillers, it has not yet been obtained.

That is, although the above-mentioned Patent Literature 1 describes a strontium titanate dispersion, the average particle size is as large as 0.1 μm to 10 μm, and it is insufficient as a transparent fine particle filler for a high refractive index material.

In addition, the aforementioned Patent Literature 2 reports on fine and spherical strontium titanate fine particles, but because the addition of a third component such as hydrazine or a hydrazide compound is essential, components other than strontium titanate are present, and the properties as a filler cannot be fully exhibited. Also, it is shown that fine particles to which the amount of the third component added is not within the specified range have a large average particle size and poor dispersibility, and there is no mention of the dispersion stability of the fine particles.

Therefore, an object of the present invention is to prepare a spherical and fine strontium titanate fine particle powder suitable for use as a filler in composite materials, and to achieve both the transparency of the composite film and the dispersion stability of the dispersion.

SOLUTION TO PROBLEM

The above technical problems can be solved by the present invention as follows.

That is, the present invention relates to a spherical strontium titanate fine particle powder having an average primary particle size of 50 nm or less and having been surface-treated with a surface treatment agent in an amount of 5 to 30% by weight (Invention 1).

The present invention also relates to the spherical strontium titanate fine particle powder according to Invention 1, in which the surface treatment agent is a polymer dispersant (Invention 2).

The present invention also relates to a dispersion containing the spherical strontium titanate fine particle powder according to Invention 1 (Invention 3).

The present invention also relates to a resin composition containing the spherical strontium titanate fine particle powder according to Invention 1 (Invention 4).

ADVANTAGEOUS EFFECTS OF INVENTION

According to the present invention, by subjecting spherical strontium titanate fine particles to a surface treatment, the surface is modified to have solvent affinity, making it possible to disperse the particles in various solvents. The particles are fine and spherical even after the surface treatment, so they are transparent and have little aggregation in the dispersion solvent. Therefore, a composite film containing the particles is transparent and not white-turbid. Furthermore, the resulting dispersion is suitable for storage and transportation because there is no sedimentation over time, and it is an industrially advantageous spherical strontium titanate fine particle powder that can achieve both transparency and dispersion stability.

DESCRIPTION OF EMBODIMENTS

The configuration of the present invention will be described in detail as follows.

First, the surface-treated spherical strontium titanate fine particle powder according to the present invention will be described.

The average primary particle size of the surface-treated spherical strontium titanate fine particle powder according to the present invention is 50 nm or less. If the average primary particle size exceeds 50 nm, the coating film may become white-turbid and transparency may not be obtained. The average primary particle size is more preferably 40 nm or less, and even more preferably 30 nm or less. The lower limit is not particularly limited, but is about 8 nm.

The surface-treated spherical strontium titanate fine particle powder according to the present invention has a part or the whole of the particle surface coated and modified with a surface treatment agent.

The amount of the surface treatment agent in the present invention is 5 to 30% by weight, more preferably 7 to 27% by weight, and even more preferably 9 to 25% by weight, based on the spherical strontium titanate fine particle powder. If the amount of the surface treatment agent is less than 5% by weight, the amount of the dispersant is small and the spherical strontium titanate fine particle powder is not sufficiently covered, so that there is a risk that dispersion stability cannot be obtained. On the other hand, if the amount of the surface treatment agent is more than 30% by weight, the amount of the dispersant becomes excessive, and there is a risk that the dispersant layer collapses, thus, dispersion stability cannot be obtained.

The surface treatment agent in the present invention is not particularly limited, and examples thereof include surfactants, wetting agents, dispersants, etc., and one or more of them can be used in combination depending on the compatibility with the dispersion solvents and resins and the intended use. When a coupling agent is used as the surface treatment agent, a hydrolysis step is required to bond by a chemical reaction. On the other hand, when a surfactant or dispersant is used as the surface treatment agent, the particle surface and the surface treatment agent are bonded by hydrogen bonds, and when the particle surface and the dispersant come into contact with each other, the surface is adsorbed and the surface can be treated, which is more preferable.

The surfactant in the present invention is not particularly limited, and examples thereof include anionic surfactants such as fatty acid salts, sulfate esters salts, sulfonate salts, phosphate esters salts, etc.; nonionic surfactants such as polyethylene glycol-type nonionic surfactants such as polyoxyethylene alkyl ethers and polyoxyethylene aryl ethers, and polyhydric alcohol-type nonionic surfactants such as sorbitan fatty acid esters, etc.; cationic surfactants such as amine salt-type cationic surfactants, quaternary ammonium salt-type cationic surfactants, etc.; and amphoteric surfactants such as alkyl betaines such as alkyl dimethylaminoacetate betaines, and alkyl imidazolines, etc.

The dispersant in the present invention is not particularly limited, and examples thereof include polymer dispersants and low molecular weight dispersants. The dispersant is preferably a polymer dispersant, since the higher the polymer, the more stable the steric hindrance can be secured and the easier it is to obtain a dispersion stabilizing effect. As the polymer dispersant, alkylol ammonium copolymers containing acid groups, acrylic polymers, block copolymers, styrene-acrylic acid copolymers, styrene-maleic acid copolymers, polycarboxylic acids and salts thereof, etc. can be used, and polymer dispersants having a molecular weight of about 800 to 2000 and having acrylic acid groups or methacrylic acid groups are preferred, and as a structure, block or graft type polymers are preferred. In addition, polymer dispersants with an acid value of 5 or more are preferred because they tend to have high affinity and reactivity with the particle surface.

The surface treatment agent has excellent adsorption properties, particularly to the surface of spherical strontium titanate fine particle powder, whose particle surfaces are hydrophilic, and adheres, adsorbs, and bonds to the fine particle surface, creating a steric hindrance and suppressing detachment, thereby providing stability to the dispersion.

The particle shape of the surface-treated spherical strontium titanate fine particle powder according to the present invention is spherical, and the circularity is preferably 0.80 or more. If the circularity of the fine particles is within the above range, the surface can be uniformly treated with a small amount of surface treatment agent. In addition, the fine particles have good filling properties in solvents, resins, etc., and are therefore suitable as fillers. A more preferred circularity is 0.85 or more, and even more preferably 0.88 to 1.00. The circularity is expressed as $(4\pi \times \text{area})/\text{perimeter}^2$ of the particle measured using an electron microscope photograph.

Next, the spherical strontium titanate fine particle powder before the surface treatment in the present invention will be described.

In the present invention, the average primary particle size of the spherical strontium titanate fine particle powder before surface treatment is preferably 50 nm or less. By setting the average primary particle size of the spherical strontium titanate fine particle powder before surface treatment to the above range, it can be uniformly dispersed in a thin film, and a transparent composite film can be obtained. The preferred average primary particle size is 40 nm or less, more preferably 30 nm or less. The lower limit is not particularly limited, but is about 8 nm.

The BET specific surface area of the spherical strontium titanate fine particle powder before surface treatment in the present invention is preferably 23.4 m$^2$/g or more. If the BET specific surface area is less than 23.4 m$^2$/g, the average particle size of the spherical strontium titanate fine particle powder will be greater than 50 nm. The BET specific surface area is more preferably 30.0 m$^2$/g or more, and even more preferably 35.0 m$^2$/g or more. The upper limit of the BET specific surface area is about 120.0 m$^2$/g.

In the present invention, the ratio (average primary particle size before surface treatment/BET equivalent particle size) of the average primary particle size of the spherical strontium titanate fine particle powder before surface treatment to the BET equivalent particle size ($6000/(\text{BET} \times 5.13)$) is preferably 0.85 to 1.25. If the ratio is within the above range, the spherical strontium titanate fine particle powder can be obtained with few particle defects and a narrow particle size distribution. On the other hand, if the ratio is outside the above range, the composition stability cannot be obtained, and there is a risk that the dispersion may gel or settle, resulting in poor dispersion stability. If the ratio is less than 0.85, the BET specific surface area is low relative to the average particle size, resulting in many coarse particles and poor distribution. If the value of the ratio is greater than 1.25, the BET specific surface area is high relative to the average particle size, resulting in many defects in the particles, such as low crystallinity. A more preferred range is 0.86 to 1.23, and even more preferably 0.87 to 1.20.

The spherical strontium titanate fine particle powder before surface treatment in the present invention has a spherical particle shape, and the circularity is preferably 0.80 or more. If the circularity of the spherical strontium titanate fine particle powder is less than 0.80, the shape may be rectangular parallelepiped or the like, and the packing density may decrease. Spherical particles with a circularity in the above range have a smaller specific surface area than rectangular parallelepiped or the like, so the amount of dispersant can be reduced, and the refractive index and transparency when composited can be increased. A more preferred circularity is 0.82 or more, and even more preferably 0.84 to 1.00.

In the present invention, the Sr/Ti of the spherical strontium titanate fine particle powder before surface treatment is preferably 0.90 to 1.10. By controlling the Sr/Ti within this range, various properties of strontium titanate, such as a high refractive index, can be exhibited. The Sr/Ti is more preferably 0.95 to 1.05, and even more preferably 0.98 to 1.02.

The refractive index of the spherical strontium titanate fine particle powder before the surface treatment in the present invention is preferably 2.080 or more, and more preferably 2.187 or more for highly crystalline fine particle powder. If the refractive index is within the above range, a transparent thin film can be formed.

The surface-treated spherical strontium titanate fine particle powder according to the present invention is spherical and fine, so that it can make the composite thin film transparent, and by surface-treating the hydrophilic surface portion with a surface treatment agent, the solvent compatibility of the particle surface is increased, and the dispersion stability in resins and the like is also improved. Therefore, the composite thin film does not become white-turbid. In addition, the surface-treated spherical strontium titanate fine particle powder according to the present invention can be used as a filler with high solvent compatibility and dispersion stability, and is suitable for optical and electronic applications.

Furthermore, by surface-treating the spherical strontium titanate fine particle powder, which is highly crystalline and has a high refractive index and is fine and has few particle defects such as composition variation, high transparency can be obtained, and industrially excellent fine particles with little variation in shape and characteristics due to processing steps can be obtained.

Next, a dispersion containing the surface-treated spherical strontium titanate fine particle powder according to the present invention will be described.

The dispersion containing the surface-treated spherical strontium titanate fine particle powder according to the present invention can be subjected to solid-liquid separation by centrifugal separation or standing, and the average dispersed particle size in the supernatant is preferably 80 nm or less, more preferably 70 nm or less, and even more preferably 60 nm or less. If the average dispersed particle size exceeds 80 nm, there is a risk that dispersion stability cannot be obtained, such as sedimentation occurring in the dispersion, or that the transparency of the composite thin film cannot be obtained. The lower limit is not particularly limited, but is about 8 nm.

The degree of achievement of dispersion of the surface-treated spherical strontium titanate fine particle powder in the dispersion according to the present invention is represented by the ratio of the average dispersed particle size in the dispersion to the average primary particle size of the surface-treated spherical strontium titanate fine particle powder (average dispersed particle size in the dispersion/average primary particle size of the surface-treated spherical strontium titanate fine particle powder). The degree of achievement of dispersion according to the present invention is preferably 5.0 or less, more preferably 3.5 or less, and even more preferably 2.0 or less. Within the above range, the dispersion contains few aggregates, so that the dispersion has excellent dispersion stability, the composite film has transparency, and a thin film without white turbidity can be obtained.

The circularity of the dispersed particles contained in the dispersion is preferably 0.80 or more, more preferably 0.84 or more, and even more preferably 0.88 to 1.00. If the circularity is less than 0.80, aggregation occurs due to changes in the shape of the fine particles caused by cracking, etc., and there is a risk that dispersion stability cannot be obtained.

The polydispersity index in the present invention is an index that represents the particle size distribution of dispersed particles contained in a dispersion, and the lower the value, the smaller the variation in the average dispersed particle size. The polydispersity index of the dispersed particles contained in the dispersion according to the present invention is preferably 0.35 or less, more preferably 0.30 or less, and even more preferably 0.29 or less. If the polydispersity index is greater than 0.35, there is a risk of bias in the properties when composited. The lower limit is 0.

Next, a method for producing the spherical strontium titanate fine particle powder before surface treatment according to the present invention will be described.

The strontium titanate fine particle powder according to the present invention can be obtained by neutralizing an aqueous solution of titanium tetrachloride as a titanium raw material with an aqueous solution of strontium hydroxide as an alkaline aqueous solution to obtain a slurry of hydrous titanium hydroxide (neutralization reaction), heating the slurry of hydrous titanium hydroxide, washing it with water, adding it to the aqueous solution of strontium hydroxide, and carrying out a wet reaction in the temperature range of 60 to 200°C.

The addition ratio (Sr/Ti) of the titanium raw material to the alkaline aqueous solution during the neutralization reaction is preferably 1.1 to 1.8. If the addition ratio is less than 1.1, the production yield of strontium titanate core particles decreases, and if it exceeds 1.8, the distribution of primary particles of strontium titanate deteriorates. A more preferable addition ratio is 1.25 to 1.65.

The reaction concentration of the reaction solution for producing strontium titanate fine particles is preferably 0.05 to 0.7 mol/L in terms of titanium compound. If the reaction concentration is less than 0.05 mol/L, the yield is low and it is not industrially viable. On the other hand, if the reaction concentration is 0.7 mol/L or more, the amount of strontium hydroxide in the reaction solution exceeds the solubility, causing $Sr(OH)_2$ to precipitate, making it difficult to carry out a uniform liquid phase reaction.

After the neutralization reaction, the mixture is washed with water and an aqueous solution of strontium hydroxide is added. The addition amount of the aqueous solution of strontium hydroxide is such that the Sr/Ti ratio becomes 1.5 to 3.0 relative to Ti in the reaction solution.

It is preferable to control the flow of nitrogen during the reaction so as to prevent the strontium compound from reacting with carbon dioxide gas or the like in the air.

The reaction temperature of the wet reaction is preferably 60 to 300°C. If the reaction temperature is less than 60°C, it is difficult to obtain dense spherical strontium titanate fine particles. If the reaction temperature exceeds 300°C, it is difficult to design the hydrothermal vessel. The reaction temperature is preferably 65 to 250°C.

The particles after the wet reaction can be washed with water in a conventional manner and dispersed in water to form a suspension, or washed with water and then dried to form a dry powder. By washing with water, excess strontium can be washed away. Impurities such as Na, K, and Cl can also be removed at the same time.

In the present invention, the desired strontium titanate fine particle powder can be obtained by controlling the reaction concentration, the Sr/Ti ratio during neutralization, and the Sr/Ti ratio during the wet reaction.

In the present invention, the dry powder may be subjected to a pulverization or crushing treatment.

Next, a method for producing the surface-treated spherical strontium titanate fine particle powder and dispersion according to the present invention will be described. The production method is a stepwise dispersion method comprising first and second steps.

In the present invention, the spherical strontium titanate fine particle powder before the surface treatment may be prepared by washing the reaction cake with water, and the resulting suspension may be used as is, or the concentration of strontium titanate may be increased by suction filtration or centrifugal filtration, or the dried powder may be used.

In the first step, the spherical strontium titanate fine particle powder of the present invention is pre-dispersed in a dispersion solvent. The dispersing machine used in the first step is not particularly limited, but is preferably a machine that can apply shear force, impact force, compression force, and/or friction force to the powder layer, and examples of such machines include roller mills, high-speed rotary mills, classifier-equipped high-speed rotary mills, ball mills, media agitation mills, airflow pulverizers, compaction shear mills, colloid mills, and roll mills.

When a media stirring mill is used in the first step, the grinding media that can be used depending on the material of the mill include steel ball beads such as stainless steel and steel; ceramic beads such as alumina, steatite, zirconia, zircon, silica, silicon carbide and silicon nitride; glass beads such as soda glass and hi-bee; and cemented carbide beads such as WC, and its size is preferably in the range of 0.05 to 2.0 mm, and more preferably in the range of 0.1 to 1.5 mm.

In the second step, the dispersion containing the spherical strontium titanate fine particle powder obtained in the first step of the present invention is stirred with a medium. As a dispersing machine used in the second step, a media stirring mill can be suitably used, and a vertical bead mill is particularly preferred.

As the grinding medium used in the second step, depending on the material of the mill, steel ball beads such as stainless steel and steel; ceramic beads such as alumina, steatite, zirconia, zircon, silica, silicon carbide and silicon nitride; glass beads such as soda glass and hi-bee; and cemented carbide beads such as WC can be used, and its size is preferably less than 100 $\mu$m, more preferably 50 $\mu$m or less, and the lower limit thereof is preferably 1 $\mu$m.

The spherical strontium titanate fine particle powder contained in the dispersion of the present invention is surface-treated with a surface treatment agent. The surface treatment agent may be added directly to the dispersion solvent in the first and/or second steps, or may be applied to the spherical strontium titanate fine particle powder in advance or may be added to the dispersion solvent first. According to the above method, a part or the whole of the surface of the spherical strontium titanate fine particle powder can be covered with the surface treatment agent. Therefore, a method of surface-treating the spherical strontium titanate fine particle powder by mixing it with the surface treatment agent while disintegrating it is preferred.

The time for the surface treatment in the present invention is not particularly limited, but it is preferable to carry out stirring and mixing at room temperature for about 30 minutes.

The dispersion according to the present invention may be subjected to centrifugation or filtration in order to remove coarse particles and impurities.

The surface-treated spherical strontium titanate fine particle powder can be obtained as a dry powder by drying the dispersion and removing the solvent. The drying method can be a heat dryer, a reduced pressure dryer, an evaporator, a vacuum stirring dryer, or the like, but is not particularly limited, and any method can be used as long as it can obtain a spherical strontium titanate fine particle powder surface-treated with a surface treatment agent by drying.

The dispersion containing the surface-treated spherical strontium titanate fine particle powder according to the present invention may be obtained by dispersing the dry powder obtained in the previous step again in a solvent, or it may be obtained as a dispersion containing surface-treated spherical strontium titanate without going through the previous drying step. In addition to the above-mentioned fine particle powder, dispersants, additives (resins, antifoaming agents, auxiliary agents, etc.) can also be added as necessary as the constituent base material of the dispersion containing the fine particle powder. The dispersion time is not particularly limited, but is preferably 1 hour or more. There is no particular upper limit, and 10 hours or more is no problem.

The solvent used in the surface treatment step and/or the dispersion in the present invention may be either aqueous or solvent-based, and one or a mixture of two or more types may be used depending on the purpose and application.

Examples of the aqueous solvent that can be used include water, or alcohol-based solvents such as methyl alcohol, ethyl alcohol, propyl alcohol, isopropyl alcohol, and butyl alcohol; glycol ether-based solvents such as methyl cellosolve, ethyl cellosolve, propyl cellosolve, and butyl cellosolve; oxyethylene or oxypropylene addition polymers such as diethylene glycol, triethylene glycol, polyethylene glycol, dipropylene glycol, tripropylene glycol, and polypropylene glycol; alkylene glycols such as ethylene glycol, propylene glycol, and 1,2,6-hexanetriol; and water-soluble organic solvents such as glycerin and 2-pyrrolidone. These dispersion solvents for aqueous dispersions can be used alone or in combination of two or more depending on the intended use.

Examples of the solvent-based solvent that can be used include aromatic hydrocarbons such as toluene and xylene; ketones such as methyl ethyl ketone and cyclohexanone; amides such as N,N-dimethylformamide, N,N-dimethylacetamide and N-methylpyrrolidone; ether alcohols such as ethylene glycol monomethyl ether, ethylene glycol monoethyl ether, diethylene glycol monomethyl ether, propylene glycol monomethyl ether and propylene glycol monoethyl ether; ether acetates such as ethylene glycol monomethyl ether acetate, ethylene glycol monoethyl ether acetate, propylene glycol monomethyl ether acetate and propylene glycol monoethyl ether acetate; acetate esters such as ethyl acetate, butyl acetate and isobutyl acetate; lactate esters such as methyl lactate, ethyl lactate and propyl lactate; cyclic esters such as ethylene carbonate, propylene carbonate and $\gamma$-butyrolactone, and various monomers. These dispersion solvents for the solvent-based dispersions can be used alone or in a mixture of two or more depending on the intended use.

The unit of the solubility parameter (SP value) of the solvent in the present invention is $(cal/cm^3)^{1/2}$. The SP value of the solvent in the present invention is preferably 5 to 25 $(cal/cm^3)^{1/2}$, more preferably 6 to 20 $(cal/cm^3)^{1/2}$, and even more preferably 7 to 15 $(cal/cm^3)^{1/2}$. Examples of solvents having an SP value of 5 to 25 $(cal/cm^3)^{1/2}$ include dimethylcyclo-hexane, examples of solvents having an SP value of 6 to 20 $(cal/cm^3)^{1/2}$ include n-pentane and formamide, and examples of solvents having an SP value of 7 to 15 $(cal/cm^3)^{1/2}$ include n-hexane, methyl ethyl ketone, propylene glycol monomethyl ether acetate, and 2-methoxyethanol. If the SP value of the solvent is within the above range, the surface treatment agent can be sufficiently dissolved in the solvent, and the surface of the fine particles can be coated by mixing with the fine particles, which is preferable. Furthermore, the dispersion can be stabilized, and a stable dispersion can be obtained without sedimentation of the fine particles.

The concentration of the surface-treated spherical strontium titanate fine particle powder, which is the solid content in the dispersion according to the present invention, is not particularly limited as long as it is capable of maintaining fluidity without causing any settling, separation, solidification or gelation, but is preferably about 10 to 60% by weight based on the total weight. If it is less than 10% by weight, the productivity for use in the next step is low, and if it exceeds 60% by weight, there is a risk that the fluidity of the dispersion will not be obtained.

The surface-treated spherical strontium titanate fine particle powder according to the present invention is obtained by physically attaching, adsorbing or chemically bonding a surface treatment agent to the surface of spherical, fine, highly crystalline spherical strontium titanate fine particle powder. Since the crystallinity of the particles before surface treatment is high, the particles can be uniformly coated with a surface treatment agent compatible with a solvent or resin while maintaining the circularity, and the particle surface can be modified to have solvent affinity. The surface-treated spherical strontium titanate fine particle powder having steric hindrance on the surface maintains its spherical shape even in a resin or solvent, and exists finely without excessive aggregation, making it possible to form a transparent thin film without white turbidity. Furthermore, by providing steric hindrance by a surface treatment agent to the spherical and fine particle surface, a dispersion with high dispersion stability without sedimentation can be obtained. In addition, the particle size of the surface-treated spherical strontium titanate fine particle powder according to the present invention is uniform, there is little drying aggregation, and redispersion is easy, so that dispersion costs and dispersion energy can be reduced.

Next, a resin composition containing the surface-treated spherical strontium titanate fine particle powder according to the present invention will be described.

The resin in the present invention is not particularly limited, and examples thereof include thermosetting resins and photocurable resins. Examples of the resin that can be used include acrylic resins; acrylic acid ester or methacrylic acid ester polymers, polycarbonate resins, polystyrene resins, polyester resins, polyimide resins, polymethyl methacrylate (PMMA) resins, AS resins, silicone resins, and fluororesins.

The concentration of the surface-treated strontium titanate fine particle powder, which is the solid content in the resin composition according to the present invention, is not particularly limited as long as the powder is dispersible in the resin, but is preferably about 10 to 60% by weight. If the solid content in the resin composition is less than 10% by weight, the productivity for use in the next step is low, and if it exceeds 60% by weight, there is a risk that the flowability of the resin composition cannot be obtained.

The surface-treated spherical strontium titanate fine particle powder, dispersion and resin composition according to the present invention may contain various general additives, such as monomers and oligomers not contained in the above-mentioned resins, dispersants, polymerization initiators, antistatic agents, refractive index regulators, antioxidants, UV absorbers, light stabilizers, leveling agents, antifoaming agents, inorganic fillers, preservatives, plasticizers, flow regulators, thickeners, pH adjusters and polymerization initiators, within the range that does not impair the effects of the invention.

The method for producing the resin composition according to the present invention is not particularly limited, and the resin composition can be produced by mixing a surface-treated spherical strontium titanate fine particle powder or/and a dispersion containing a surface-treated spherical strontium titanate fine particle powder with a resin. The mixing method can be a propeller agitator, a disperser, or ultrasonic waves. The mixing time is not particularly limited as long as sufficient stirring and mixing can be performed, but about 1 hour is preferable. The viscosity of the resin composition may be such that handling properties are not impaired.

EXAMPLES

Examples of the present invention will be described below, but the present invention is not limited to these.

[Average primary particle size]

The average primary particle size was measured from approximately 50 particles in a photograph (25,000 × magnification) observing a spherical strontium titanate fine particle powder before and after the surface treatment using a transmission electron microscope (JEM-F200 manufactured by JEOL Ltd.). Here, the average primary particle size is the particle size calculated by averaging the diameter of a circle having the same area as the area determined for each particle from the photograph. The particle shape was determined from the electron microscope photograph.

[Circularity]

The circularity of the particle powder and the dispersed particles was expressed as $(4\pi \times area)/perimeter^2$ of the particle measured from the electron micrograph described above.

[Average dispersed particle size and polydispersity index]

The average dispersed particle size was obtained by measuring each dispersion using a dynamic light scattering method (FPAR-1000, manufactured by Otsuka Electronics Co., Ltd.) and using a cumulant analysis method. At the same time, the polydispersity index, which indicates the particle size distribution, was measured using a histogram analysis method.

[Dispersion Sedimentation Test]

A dispersion sedimentation test was conducted to evaluate the dispersion stability. Dispersions containing the surface-treated spherical strontium titanate fine particle powder were stored at 25°C, and after one month, the presence or absence of sedimentation was visually confirmed, and those without sedimentation were marked with ∘, and those with sedimentation were marked with ×.

[Specific surface area and BET equivalent particle size]

The specific surface area value was measured by the BET method and is represented in $m^2/g$. The BET equivalent particle size (nm) was calculated by the relational expression: 6000/(BET specific surface area × 5.13), where 5.13 is the density $(g/cm^3)$ of strontium titanate. The ratio (average primary particle size/BET equivalent particle size) is calculated from the average primary particle size and the BET equivalent particle size.

[Particle Density]

The particle density was measured using a particle density measuring device BELPYCNO (manufactured by MicrotracBEL Corp.).

[Refractive index of dispersion]

Two grams (2 g) of each strontium titanate fine particle powder was mixed with 8 g of 2-methoxypropanol for 120 minutes to prepare a dispersion with a solid content of 20% by weight. The refractive index of the dispersion was measured using an Abbe refractometer RX-7000α (manufactured by ATAGO Co., Ltd.).

[Refractive index of particles]

The refractive index of a strontium titanate fine particle powder was calculated according to the following formula using the particle density of the fine particle powder, the refractive index of a dispersion, and the solid content in a dispersion. When the dispersion is considered to be a complex of a solvent and a filler (powder), the refractive index n of the dispersion can be calculated by the following formula (1). V1 is the volume fraction of the filler, n1 is the refractive index of the filler, V2 is the volume fraction of the solvent, and n2 is the refractive index of the solvent. In other words, the refractive index of the filler can be calculated from the measured refractive index and the volume fraction of each component in the dispersion.

[mathematical formula 1]

$$n = V1 \times n1 + V2 \times n2 \dots (1)$$

The refractive index n1 of the filler is expressed by the following formula (2). Since it is difficult to actually measure the volume fraction in the dispersion, the refractive index is calculated from the weight fraction w1 (filler), w2 (solvent) and density d1 (filler), d2 (solvent) of each component, which are easy to measure, and is expressed by the following formulas (3) and (4), respectively. The refractive index of the filler can be calculated by substituting formulas (3) and (4) into formula (2).

[mathematical formula 2]

$$n1 = \frac{n - n2 \times V2}{V1} \quad ...(2)$$

[mathematical formula 3]

$$V1 = \frac{\frac{w1}{d1}}{\frac{w1}{d1} + \frac{w2}{d2}} \quad ...(3)$$

[mathematical formula 4]

$$V2 = \frac{\frac{w2}{d2}}{\frac{w1}{d1} + \frac{w2}{d2}} \quad ...(4)$$

[Solid content in dispersion]

The solid content in a dispersion is expressed as % by weight, calculated from formula (5) after calcining the strontium titanate dispersion in a muffle furnace at 300°C for 1 hour.

[mathematical formula 5]

$$\text{weight after calcination (g)/weight before calcination (g)} \times 100 \qquad (5)$$

[Sr/Ti molar ratio]

The Sr/Ti ratio was measured using an X-ray fluorescence analyzer (ZSX Primus II manufactured by Rigaku Holdings Corporation).

[Evaluation of total light transmittance and thin film white turbidity]

The total light transmittance of each coating film was measured using a turbidity meter (NDH2000 manufactured by Nippon Denshoku Industries Co., Ltd.). The transmittance obtained when measured in air was evaluated as 100%, and the total light transmittance of each coating film is preferably 90% or more. The evaluation of the thin film white turbidity was performed by visually observing each coating film, and those without white turbidity were marked with ∘, and those with white turbidity were marked with ×.

Example 1

A titanium tetrachloride aqueous solution was mixed with water so that the molar concentration of Ti was 2.10 mol/l, and a 20 wt% strontium hydroxide aqueous solution was added to the solution so that the Sr/Ti molar ratio was 1.32 to obtain a titanium hydroxide slurry, which was then washed with water. The obtained titanium hydroxide slurry was poured into an aqueous strontium hydroxide solution that had been dissolved in a reaction vessel in advance. The aqueous strontium hydroxide solution was adjusted to a Sr/Ti molar ratio of 2.0. The concentration during the reaction was 0.28 mol/l as the strontium titanate concentration. After that, the mixture was stirred for 8 hours at 260°C to perform a hydrothermal reaction. After the reaction, the mixture was cooled to room temperature, washed with water, filtered, and dried to obtain a white powder of strontium titanate fine particles.

The obtained spherical strontium titanate fine particle powder was spherical particles with an average primary particle size of 22.12 nm and a circularity of 0.92, Sr/Ti was 0.978, particle density was 4.71 g/cc, BET specific surface area was 45.9 m$^2$/g, BET equivalent particle size was 25.5 nm, and the ratio of average primary particle size/BET equivalent particle size was 0.87. The solid content in a dispersion adjusted for calculating the particle refractive index was 19.72 wt%, the refractive index of the dispersion was 1.440, and the particle refractive index calculated was 2.196.

As the first step of dispersion, 10.5 g of the spherical strontium titanate fine particle powder obtained in the previous step was added to 59.5 g of 2-methoxyethanol in a 200 mL mayonnaise bottle. ZrO$_2$ beads of 100 μmΦ diameter (Zirconia Ball YTZ series, manufactured by Nikkato Corporation) were added and the mixture was dispersed for 1 hour using a paint shaker (manufactured by Toyo Seiki Seisaku-sho, Ltd.), after which the beads were removed to obtain a dispersion with a solid content of 15% by weight.

Next, as the second step of dispersion, a new mayonnaise bottle was prepared, and the dispersion containing the spherical strontium titanate fine particle powder obtained in the previous step and a surface treatment agent (Disperbyk-180 manufactured by BYK-Chemie) were added at 10% by weight relative to the spherical strontium titanate fine particle powder, and ZrO$_2$ beads of 50 μmΦ diameter (Zirconia Ball YTZ Series manufactured by Nikkato Co., Ltd.) were added, and the mixture was dispersed again for 4 hours using a paint shaker (manufactured by Toyo Seiki Seisaku-sho, Ltd.). The ZrO$_2$ beads were removed, and a dispersion containing the surface-treated spherical strontium titanate fine particle powder was obtained.

The dispersion was dried at 80°C for 12 hours using a high-temperature thermostat to obtain a surface-treated spherical strontium titanate fine particle powder.

Table 1 shows the characteristics of the spherical strontium titanate fine particle powder before surface treatment, Table 2 shows the surface treatment conditions and the characteristics of the surface-treated spherical strontium titanate fine particle powder, and Table 3 shows the characteristics and effects of the dispersion.

Table 1

| | type | BET [m$^2$/g] | average primary particle size [nm] | BET equivalent particle size [nm] | ratio of average primary particle size /BET equivalent particle size | Sr/Ti [mol ratio] | refractive index of particle | density of particle [g/cc] | circularity |
|---|---|---|---|---|---|---|---|---|---|
| Example 1 | strontium titanate | 45.9 | 22.12 | 25.5 | 0.87 | 0.978 | 2.196 | 4.71 | 0.92 |
| Example 2 | strontium titanate | 45.9 | 22.12 | 25.5 | 0.87 | 0.978 | 2.196 | 4.71 | 0.92 |
| Example 3 | strontium titanate | 45.9 | 22.12 | 25.5 | 0.87 | 0.978 | 2.196 | 4.71 | 0.92 |
| Example 4 | strontium titanate | 45.9 | 22.12 | 25.5 | 0.87 | 0.978 | 2.196 | 4.71 | 0.92 |
| Example 5 | strontium titanate | 45.9 | 22.12 | 25.5 | 0.87 | 0.978 | 2.196 | 4.71 | 0.92 |
| Comparative Example 1 | strontium titanate | 24.4 | 38.50 | 47.9 | 0.80 | 1.015 | 2.186 | 4.75 | 0.83 |
| Comparative Example 2 | strontium titanate | 45.9 | 22.12 | 25.5 | 0.87 | 0.978 | 2.196 | 4.71 | 0.92 |
| Comparative Example 3 | strontium titanate | 45.9 | 22.12 | 25.5 | 0.87 | 0.978 | 2.196 | 4.71 | 0.92 |
| Comparative Example 4 | strontium titanate | 24.8 | 84.36 | 47.2 | 1.79 | 1.069 | 2.075 | 4.30 | 0.90 |

Table 2

| | conditions for surface treatment | | | | various properties of surface-treated spherical strontium titanate fine particle powder | | |
|---|---|---|---|---|---|---|---|
| | properties of dispersant | brand | maker | acid value (mmol) | average primary particle size [nm] | amount of surface treatment [% by weight] | circularity |
| Example 1 | polymer dispersant | Disper-byk-180 | BYK-Che-mie | 94 | 22.08 | 10 | 0.88 |
| Example 2 | polymer dispersant | Disparlon AQ-380 | Kusumoto Chemicals, Ltd. | 15 | 22.92 | 10 | 0.88 |
| Example 3 | polymer dispersant | Disper-byk-190 | BYK-Che-mie | 10 | 22.66 | 20 | 0.91 |
| Example 4 | polymer dispersant | Disparlon AQ-380 | Kusumoto Chemicals, Ltd. | 15 | 22.27 | 20 | 0.90 |
| Example 5 | polymer dispersant | Disper-byk-190 | BYK-Che-mie | 10 | 21.21 | 10 | 0.94 |
| Comparative Example 1 | - | - | - | - | - | - | - |
| Comparative Example 2 | polymer dispersant | Disper-byk-180 | BYK-Che-mie | 94 | 21.28 | 3 | 0.90 |
| Comparative Example 3 | polymer dispersant | Disper-byk-180 | BYK-Che-mie | 94 | 22.14 | 50 | 0.88 |
| Comparative Example 4 | polymer dispersant | Disper-byk-190 | BYK-Che-mie | 10 | 86.90 | 20 | 0.88 |

Table 3

| | | various properties of dispersion | | | | | | | effect | | |
|---|---|---|---|---|---|---|---|---|---|---|---|
| | dispersion solvent | sp value of dispersion solvent [(cal/cm$^3$)$^{1/2}$] | average dispersed particle size [nm] | polydispersity index | degree of achievement of dispersion (average dispersed particle size /average primary particle size) | circularity of dispersed particles | refractive index of dispersion | solid content in dispersion [% by weight] | total light transmittance [%] | evaluation of white turbidity of thin film, white turbidity→O, no white turbidity→× | dispersion sedimentation test |
| Example 1 | 2-methoxyethanol | 10.2 | 26.1 | 0.29 | 1.2 | 0.88 | 1.440 | 19.72 | 90.0 | ○ | ○ |
| Example 2 | 2-methoxyethanol | 10.2 | 38.5 | 0.25 | 1.7 | 0.88 | 1.440 | 19.72 | 91.0 | ○ | ○ |
| Example 3 | PGMEA | 9.4 | 44.0 | 0.16 | 1.9 | 0.91 | 1.440 | 19.72 | 90.5 | ○ | ○ |
| Example 4 | MEK | 9.3 | 31.2 | 0.22 | 1.4 | 0.90 | 1.440 | 19.72 | 90.8 | ○ | ○ |
| Example 5 | MEK | 9.3 | 30.1 | 0.28 | 1.4 | 0.94 | 1.440 | 19.72 | 90.7 | ○ | ○ |
| Comparative Example 1 | 2-methoxyethanol | 10.2 | 88.0 | 0.23 | 2.3 | 0.91 | 1.439 | 19.43 | 90.0 | × | × |
| Comparative Example 2 | 2-methoxyethanol | 10.2 | 60.2 | 0.28 | 2.8 | 0.90 | 1.440 | 19.72 | 90.0 | × | × |
| Comparative Example 3 | 2-methoxyethanol | 10.2 | 70.7 | 0.21 | 3.2 | 0.88 | 1.440 | 19.72 | 91.2 | × | × |
| Comparative Example 4 | MEK | 9.3 | 114.3 | 0.09 | 1.3 | 0.88 | 1.437 | 19.66 | 91.3 | × | × |

# EP 4 660 142 A1

Examples 2 to 5

A surface-treated spherical strontium titanate fine particle powder-containing dispersion and a surface-treated spherical strontium titanate fine particle powder were obtained in the same manner as in Example 1, except that the surface treatment conditions were changed as shown in Table 2.

Comparative Example 1

A strontium titanate fine particle powder (Sigma-Aldrich Strontium titanate 517011-50G, average particle size 38.5 nm) was used, and in the first step of dispersion, 2.25 g of the strontium titanate fine particle powder was added to 12.75 g of methyl cellosolve in a 30 mL sample bottle. $ZrO_2$ beads of 100 $\mu$m diameter (Zirconia Ball YTZ Series, manufactured by Nikkato Co., Ltd.) were added to this, and dispersion was performed for 1 hour using a paint shaker (Toyo Seiki Seisaku-sho, Ltd.).

Next, as the second step of dispersion, a new sample bottle was prepared, and the dispersion containing the spherical strontium titanate fine particle powder obtained in the previous step and $ZrO_2$ beads of 50 $\mu$m diameter (Zirconia Ball YTZ Series, manufactured by Nikkato Co., Ltd.) were added, and the mixture was dispersed again for 2 hours using a paint shaker (manufactured by Toyo Seiki Seisaku-sho, Ltd.), then, the $ZrO_2$ beads were removed to obtain a dispersion with a solid content of 15% by weight, and a particle powder was obtained by the same procedure as in Example 1.

The dispersion prepared for calculating the particle refractive index had a solid content in the dispersion of 19.43% by weight and a refractive index of the dispersion of 1.439, and the particle refractive index calculated was 2.186.

Comparative Examples 2 and 3

A dispersion containing surface-treated spherical strontium titanate fine particle powder and a surface-treated spherical strontium titanate fine particle powder were obtained in the same manner as in Example 1, except that the surface treatment conditions were changed as shown in Table 2.

Comparative Example 4

An aqueous solution of strontium hydroxide and an aqueous solution of titanium tetrachloride were added so that the molar ratio of Sr to Ti was 1.6, and a neutralization reaction was carried out, then, the aqueous solution of strontium hydroxide and the titanium hydroxide slurry obtained above were charged into a reaction vessel so that the molar ratio of Sr to Ti was 1.5, and a reaction thereof was carried out at 90°C for 3 hours to obtain a white powder of strontium titanate fine particles.

A surface-treated spherical strontium titanate fine particle powder-containing dispersion and a surface-treated spherical strontium titanate fine particle powder were obtained in the same manner as in Example 1, except that the surface treatment conditions were changed as shown in Table 2.

The dispersion prepared for calculating the particle refractive index had a solid content in the dispersion of 19.66% by weight and a refractive index of the dispersion of 1.437, and the particle refractive index calculated was 2.075.

Next, the preparation of coating films for evaluating total light transmittance and thin film white turbidity will be described.

Two grams (2 g) of the dispersion prepared in the previous step and 3 g of a mixed resin (CN2283 (polyester acrylate manufactured by Sartomer)/SR833 (tricyclodecane dimethanol diacrylate manufactured by Sartomer)) + a photopolymerization initiator (Omnirad380 (bis(2,4,6-trimethylbenzoyl)-phenylphosphoroxide) manufactured by IGM RESINS) were mixed into a 30 mL sample bottle to prepare a coating solution of each strontium titanate fine particle (solid content 9%). The coating solution was applied to a PET film (Luminar manufactured by Toray Industries, Inc.) to a thickness of 12 $\mu$m using K HAND COATER manufactured by RK PrintCoat Instruments Ltd., and cured by an area irradiator (for UV curing) manufactured by CCS Inc. to prepare a coating film.

As shown in Table 3, it was confirmed that the coating films using the strontium titanate fine particle powders obtained in Examples 1 to 5 were free from white turbidity and had excellent transparency. In addition, it was confirmed that the dispersions did not cause sedimentation and had excellent dispersion stability.

INDUSTRIAL APPLICABILITY

The spherical strontium titanate fine particle powder according to the present invention is fine and spherical, so that a transparent composite film can be obtained. In addition, the surface treatment improves the solvent affinity of the surface of the fine particles, so that a powder, dispersion, and resin composition with less aggregation and high dispersion stability can be prepared, and the dispersion stability is also high. Furthermore, since the spherical strontium titanate fine particle powder has few particle defects and is highly crystalline, the dispersion stability is improved and a dispersion without sediment can be obtained. The spherical strontium titanate fine particle powder according to the present invention can control the average particle size according to the purpose, and because of its spherical shape, it is easy to increase the filler filling density in the composite. Therefore, the spherical strontium titanatebased fine particle powder of the present invention is optimal for a high refractive index inorganic filler for increasing the refractive index of a resin composition in a diffractive optical element used for a brightness enhancement film used in displays, or XR (AR, MR, VR) glass, or for a high dielectric inorganic filler for a high dielectric resin composition that can be used in electronic components such as a thin film transistor (TFT).

**Claims**

1. A spherical strontium titanate fine particle powder having an average primary particle size of 50 nm or less and having been surface-treated with 5 to 30% by weight of a surface treatment agent.

2. The spherical strontium titanate fine particle powder according to claim 1, wherein the surface treatment agent is a polymer dispersant.

3. A dispersion comprising the spherical strontium titanate fine particle powder according to claim 1.

4. A resin composition comprising the spherical strontium titanate fine particle powder according to claim 1.

## INTERNATIONAL SEARCH REPORT

| | International application No. |
|---|---|
| | **PCT/JP2023/046657** |

**A. CLASSIFICATION OF SUBJECT MATTER**

*C01G 23/00*(2006.01)i; *C08K 3/24*(2006.01)i; *C08K 7/18*(2006.01)i; *C08L 101/00*(2006.01)i
FI:  C01G23/00 C; C08L101/00; C08K3/24; C08K7/18

According to International Patent Classification (IPC) or to both national classification and IPC

**B. FIELDS SEARCHED**

Minimum documentation searched (classification system followed by classification symbols)

C01G23/00; C08K3/24; C08K7/18; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-20919 A (TITAN KOGYO KK) 08 February 2018 (2018-02-08)<br>claims, paragraphs [0039]-[0040], [0051]-[0054], table 1 | 1-4 |
| X | JP 2018-194775 A (KONICA MINOLTA INC.) 06 December 2018 (2018-12-06)<br>claims, paragraphs [0062], [0143]-[0148], table 1, no. 1, 2, 4, 5, 8 | 1-4 |
| Y | JP 2007-214107 A (TORAY INDUSTRIES, INC.) 23 August 2007 (2007-08-23)<br>claims, paragraphs [0019]-[0020], [0123] | 1-4 |
| Y | JP 2019-151507 A (TITAN KOGYO KK) 12 September 2019 (2019-09-12)<br>claims, paragraphs [0012], [0032], examples 1-3, 7, 12 | 1-4 |
| P, X | WO 2023/008395 A1 (TODA KOGYO CORP.) 02 February 2023 (2023-02-02)<br>claims, paragraphs [0063], [0072]-[0079] | 1-4 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/046657**

| Patent document cited in search report | | | Publication date (day/month/year) | Patent family member(s) | Publication date (day/month/year) |
|---|---|---|---|---|---|
| JP | 2018-20919 | A | 08 February 2018 | (Family: none) | |
| JP | 2018-194775 | A | 06 December 2018 | (Family: none) | |
| JP | 2007-214107 | A | 23 August 2007 | US 2009/0103236 A1 claims, paragraphs [0020]-[0021], [0123] EP 1939894 A1 CN 101258560 A KR 10-2008-0041711 A | |
| JP | 2019-151507 | A | 12 September 2019 | (Family: none) | |
| WO | 2023/008395 | A1 | 02 February 2023 | TW 202321156 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019123916 A

- JP 2022058093 A